# EUROPEAN PATENT APPLICATION

(11) **EP 3 291 192 A1**
(43) Date of publication of application: **07.03.2018**
(21) Application number: 16382409.7
(22) Date of filing: 01.09.2016
(51) Int. Cl.: G08B 17/06, G01J 5/08, G01J 3/18, G01K 11/32

(54) **MONITORING SYSTEM OF AN AIRCRAFT BLEED AIR SYSTEM**

(71) Applicant: Airbus Operations, S.L., 28906 Getafe Madrid (ES)
(72) Inventor: PETRAC, Markus, 28906 Getafe (ES)
(74) Representative: Elzaburu S.L.P.

(57) **Abstract**

The invention provides a monitoring system of an overheat or fire condition in a compartment (10) or system of an aircraft, particularly the bleed air system (11). The monitoring system comprises optical fiber cables (39; 59, 59') with FBG sensors (41; 61, 61') connected by one of its ends through an interface (38; 58, 58') to a laser emitter (33; 53, 53') and to an optical receiver (35; 55, 55') which is connected to a computational system (37; 57, 57') comprising means for comparing the wavelength of the reflected signals by the FBG sensors (41; 61, 61') with their expected values without temperature variations to detect a temperature variation in said compartment (10) or system exceeding a predetermined limit.

## Description

The present invention relates to a monitoring system of an overheat or fire condition in a compartment or system of an aircraft and, particularly, in the bleed air system.

### BACKGROUND

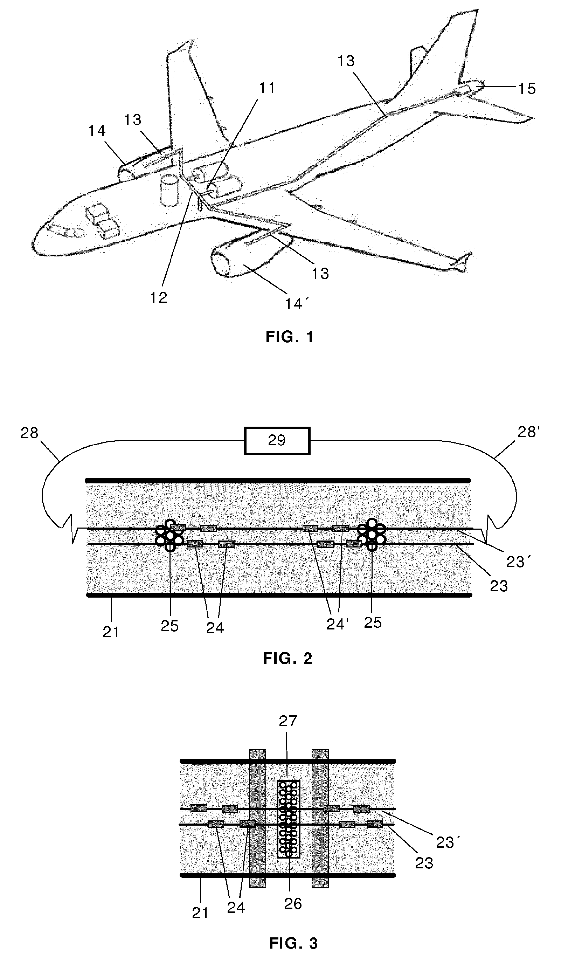

The aircraft bleed air system (see Fig. 1) supplies pressure stabilized and temperature controlled bleed air from different sources such as the engines 14, 14' and the Auxiliary Power Unit 15 to different user systems such as the air conditioning or the wing anti-ice systems. The hot bleed air, which reaches temperatures higher than 200ºC, is conveyed by a ducting 12 formed by several branches 13, each of them formed by a plurality of ducts, to supply hot bleed air to their consuming units.

In the event of a duct leak the bleed air flows out of the damaged duct and can damage other components or systems.

A known system to detect a hot air leakage in an aircraft bleed air system, (see Figures 2 and 3), uses sensing elements 23, 23' secured to the ducts 21 by means of brackets 24, 24'. The ducts 21 are provided with an insulation cover 22 (typically a titanium foil) having first outlet orifices 25 configured as a set of seven holes and the connection arrangements 27 of two contiguous ducts 21 include second outlet orifices 26 (usually called flow guidance devices) as escape ways for hot air leaked from the ducts 21 to be detected by the sensing elements 23, 23'.

The sensing elements 23, 23' are configured by an outer conductor embodied as a thin pipe or tube, an inner conductor embodied as a wire or the like running along in the center of the outer conductor, and a special salt compound pressed or enclosed in the annular space between the two conductors. At normal acceptable surrounding ambient temperatures, this salt compound acts as an electrical insulator. On the other hand, when the salt compound is heated above a prescribed temperature, the salt compound becomes electrically conductive and thus forms a low-resistance electrical path or connection between the inner and outer conductors at this overheated location. The so-called trigger temperature at which the salt compound becomes electrically conductive can be adjusted or preselected based on the composition or mixture proportions of the salt compound.

As shown in Figure 2 a sensing element 23' (and similarly a sensing element 23) is connected in a continuous loop by its electrical plugs through wires 28, 28' to a computer system 29, which evaluates the electrical data provided by the sensing element 23'.

This system requires hundreds of connections because of the handing and manufacturing constraints of the sensing elements making thus the system overall unreliable, costly, expensive to install. In fact, it requires more than 2km of wires in modern 2 or 4 engine aircraft. Additionally the localization of a leak is in practice inaccurate that makes later trouble shooting difficult and time consuming.

To solve the above mentioned problems US 6,881,948 B2 discloses the use of an optical fiber cable arranged along an object or space as a temperature sensor to monitor the temperature thereof and detect overheating or fire conditions. An end of the sensor is connected through an interface to a laser emitter and an optical receiver, which are further connected to a computer. The computer controls the laser emitter to emit a laser pulse into the sensor. The optical receiver receives the resulting reflected signal from the sensor, and provides a corresponding signal to the computer to be evaluated in connection with a nominal comparison signal. If any location of the sensor is subjected to an unacceptable temperature increase, the sensor's refractive characteristics are changed, to cause an additional reflected pulse in the reflected signal. By evaluating the amplitude and the return time of the additional reflection pulse, the temperature level and the location of the overheating condition are determined by the computer.

The monitoring system disclosed by US 6,881,948 B2 is based on light scattering and optical time-domain reflectometry (OTDR) technology. Even though it improves the above-mentioned known system, the need of computing the return times of the additional reflected pulses to identify the location of hot air leaks makes this monitoring system complex and difficult to implement.

### SUMMARY OF THE INVENTION

The invention provides a monitoring system of an overheat or fire condition in a compartment of an aircraft, such as the Auxiliary Power Unit compartment or an engine compartment, or in a system of an aircraft, such as the air conditioning system (pack bay), the trim (hot) air system (mixer bay and bilge) and, particularly, the bleed air system.

The monitoring system comprise at least an optical fiber cable with Fiber Bragg Grating sensors (hereinafter FBG sensors) arranged in said compartment or system and connected by one of its ends through an interface to a laser emitter and to an optical receiver which are connected to a computational system with means for comparing the wavelength of the reflected signals by the FBG sensors with their expected values without temperature variations to detect a temperature variation in said compartment or system exceeding a predetermined limit.

The monitoring system of the bleed air system comprises, preferably, two optical fiber cables with FBG sensors arranged on the ducts of the different branches of the bleed air system ducting. These ducts are provided with an insulation cover having first outlet orifices as escape ways for hot air leaks. There are also second outlet orifices in the connection arrangement of two contiguous ducts. The FBG sensors are distributed along the optical fiber cables and are configured so that said first and second outlet orifices are located within the area covered by said FBG sensors.

The FBG sensors of the optical fiber cable can be configured with a single Fiber Bragg Grating of a given length, each FGB sensor reflecting a different wavelength, or with groups of Fiber Bragg Gratings, each FGB sensor reflecting a different wavelength.

Other characteristics and advantages of the present invention will be clear from the following detailed description of embodiments illustrative of its object in relation to the attached drawings.

### BRIEF DESCRIPTION OF THE DRAWINGS

Figure 1 is a schematic perspective view of the bleed air system of an aircraft.
Figure 2 is a schematic plan view of a section of a duct belonging to the bleed air system of an aircraft with the sensing means of a known system.
Figure 3 is a schematic plan view of a connection arrangement between two contiguous ducts belonging to the bleed air system of an aircraft with the sensing means of a known system.
Figure 4 is a schematic diagram of a monitoring system of an overheat or fire condition in a temperature sensitive compartment of an aircraft according to the invention.
Figure 5a is a schematic of side view of a Fiber Bragg Grating engraved in an optical fiber cable with a representation of its refractive index modulation.
Figure 5b is a representation of the reflective spectrum of said Fiber Bragg Grating and the spectral shift promoted by a temperature variation.
Figure 6 is a schematic diagram of a monitoring system of an overheat or fire condition in a branch of the bleed air system of an aircraft according to the invention.

### DETAILED DESCRIPTION OF THE INVENTION

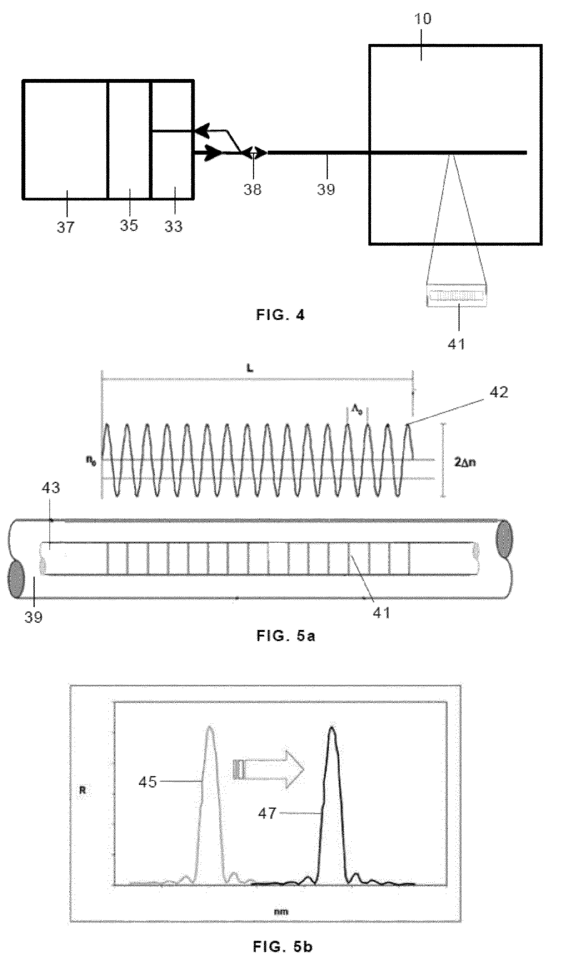

A monitoring system of an overheat or fire condition in a compartment 10 of an aircraft (see Fig. 4) comprises at least an optical fiber cable 39 having at least a FBG sensor 41 within the compartment 10 connected by one of its ends through an interface 38 to a laser emitter 33 and to an optical receiver 35 that are connected to a computational system 37. As represented in Fig. 5a, a FBG sensor 41 is a periodic pattern 42 induced in the refractive index of the core 43 of optical fiber cable 39 by means, for instance, of an intense UV holographic beam.

The periodic optical structure of a FBG sensor 41 behaves as a very narrow optical filter with its reflective spectrum, shown as 45 in FIG. 5b, centered in a wavelength given by the Bragg condition, I=2nL, where I is the central wavelength of the spectral signal of the grating (known as Bragg wavelength), n is the average effective refractive index along the grating, and L is the pitch of the periodic structure of the grating.

If the FBG sensor 41 is submitted to a temperature variation, the pitch and the refractive index of the grating changes being the centre of the new reflective spectrum, shown as 47 in Fig. 5b, shifted to a new position given by the new Bragg condition. The shift is by far less than 1 nm. The relation between the temperature variation and the wavelength shift is absolutely linear.

The laser emitter 33, controlled by the computational system 37, generates laser pulses that are transmitted by the optical fiber cable 39.

The optical receiver 35 receives from the optical fiber cable 39 reflected signals produced by the FBG sensor 41.

The computational system 37 evaluates the wavelengths of the reflected signals received by optical receiver 35 to detect if any of them is different than the expected wavelength in a predetermined magnitude as a consequence of an overheat or fire condition in the compartment 10.

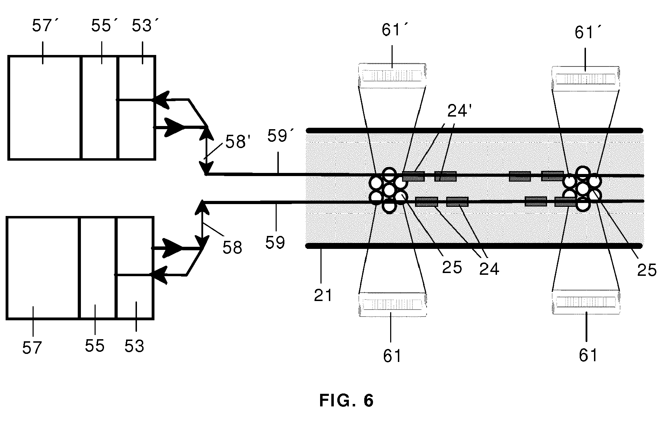

A monitoring system of the bleed air system 11 (see Fig. 6a) comprises for each branch 13 of the ducting 12 two optical fiber cables 59, 59' arranged on the ducts 21 in a similar manner than the two sensing elements 23, 23' of the known system described in the Background (in both cases the detection means of hot air leaks are duplicated by security reasons). Thus the optical fiber cables 59, 59' are installed so that they are close to the first and second outlet orifices 25, 26 to detect hot air. Brackets 24, 24' are used to secure the optical fiber cables 59, 59' to the ducts 21 and also complementary means to avoid mechanical strains in the optical fiber cables 59, 59' which would also produce wavelength shifts in the reflected signals.

The optical fiber cables 59, 59' are provided with FBG sensors 61, 61' distributed along its length so that any of them is close to a first or second outlet orifice 25, 26 to be able to detect the location of a hot air leak. It should be noted than in this case the identification of the location of a hot air leak is not made processing the return times of the signals reflected by the sensing means that detect a hot air leak (as in the system disclosed in US 6,881,948 B2) but through the identification of the FBG sensor 61, 61' that reflects a signal with a shifted wavelength.

The laser emitters 53, 53', controlled by the computational systems 57, 57', generate laser pulses that are transmitted by the optical fiber cables 59, 59'.

The optical receivers 55, 55' receive from the optical fiber cables 59, 59' reflected signals produced by the FBG sensors 61, 61'.

The computational systems 67, 67' evaluate the wavelengths of the reflected signals received by the optical receivers 55, 55' to detect if any of them is different than the expected wavelength in a predetermined magnitude as a consequence of a hot air leak in the branch 13.

The distribution of the FBG sensors 61, 61' along the optical fiber cables 59, 59' must assure that once they are arranged over the branch 13 there is a FBG sensor 61, 61' sufficiently close to every first or second outlet orifice 25, 26 without the need of any external mark in the optical fiber cables 59, 59'.

Taking into account that the monitoring system of the invention is intended to be implemented in the aircraft bleed air system as a substitution of the sensing elements 23, 23' by the optical fiber cables 59, 59' (and their associated computing means) without substantial variations in the ducting 12, the distribution of the FBG sensors 61, 61' shall be adapted to a distance of about 1" between the first and second outlet orifices 25, 26.

The FBG sensors 61, 61' to be installed the optical fiber cables 59, 59' can be sensors with a single Fiber Bragg Grating configured to reflect a particular wavelength or with a group of Fiber Bragg Gratings configured to reflect a particular or different wavelengths.

In any case the number of FBG Sensors 61, 61' in an optical fiber cable 59, 59' shall be compatible with the bandwidth of the laser emitters 53, 53'.

Ideally, the spatial distribution of the FBG sensors 61, 61' would be compatible to the distribution of the first and second outlet orifices 25, 26 of branch 13 in order to have a biunivocal relation between them but this is not the only alternative given the available technical alternatives for installing FBG sensors.

Although the present invention has been described in connection with various embodiments, it will be appreciated from the specification that various combinations of elements, variations or improvements therein may be made, and are within the scope of the invention as defined by the appended claims.

## Claims

1. Monitoring system of an overheat or fire condition in a compartment (10) or system of an aircraft comprising at least an optical fiber cable (39, 59) connected by one of its ends through an interface (38; 58) to a laser emitter (33, 53) and to an optical receiver (35, 55) which are connected to a computational system (37, 57), **characterized in that**:
- the optical fiber cable (39, 59) comprises one or more FBG sensors (41, 61) configured for reflecting signals having a predetermined wavelength for each light pulse injected in it by the laser emitter (33, 53);
- the optical fiber cable (39, 59) is arranged in said compartment (10) or system with the one or more FBG sensors (41, 61) being suitably located so that their temperature variations can be considered as representative temperature variations for the compartment (10) or system;
- the computational system (37, 57) comprise means for comparing the wavelength of the reflected signals by the FBG sensors (41, 61) with their expected values without temperature variations to detect a temperature variation in said compartment (10) or system exceeding a predetermined limit.

2. Monitoring system according to claim 1, wherein said compartment (10) is the Auxiliary Power Unit compartment and/or an engine compartment.

3. Monitoring system according to claim 1, wherein said system is the air conditioning system or the trim air system.

4. Monitoring system according to claim 1, wherein said system is the bleed air system (11);
- the bleed air system (11) comprising a ducting (12) formed by several branches (13) to supply hot bleed air to hot air consuming units;
- each branch (13) comprising a plurality of ducts (21) with an insulation cover (22);
- each branch (13) comprising first outlet orifices (25) in the insulation cover (22) of ducts (21) and second outlet orifices (26) in the connection arrangement of two contiguous ducts (21) as escape ways for hot air leaks in the ducts (21);
**characterized in that**:
- the optical fiber cable (59) is arranged in said branch (13) so that it is located next to said first and second outlet orifices (25, 26);
- the distribution and configuration of the FBG sensors (61) in the optical fiber cable (59) is made so that said first and second outlet orifices (25, 26) are located within their sensed area;
- the computational system (57) comprise means for comparing the wavelength of the reflected signals by the FBG sensors (61) with their expected values without temperature variations along the optical fiber cable (59) to detect a leak of hot air in the branch (13).

5. Monitoring system according to claim 4, wherein the FBG sensors (61) are Fiber Bragg Gratings of a given length, each FGB sensor (61) reflecting a different wavelength.

6. Monitoring system according to claim 4, wherein the FBG sensors (61) are groups of Fiber Bragg Gratings, each FGB sensor (61) reflecting a different wavelength.

7. Monitoring system according to any of claims 4-6, further comprising an additional optical fiber cable (59') with additional FBG sensors (61') arranged in said branch (13) so that it is located next to said first and second outlet orifices (25, 26) and connected by one of its ends through an additional interface (58') to an additional laser emitter (53') and to an additional optical receiver (55') which are connected to an additional computation system (57').

8. Monitoring system according to any of claim 4-7, wherein the FBG sensors (61, 61') are distributed along the optical fiber cables (59, 59') so that each of them can be associated to one of the first and second outlet orifices (25, 26).
